# EUROPEAN PATENT APPLICATION

(11) **EP 4 406 986 A1**
(43) Date of publication of application: **31.07.2024**
(21) Application number: 23153027.0
(22) Date of filing: 24.01.2023
(51) Int. Cl.: C08G 18/32, C08G 18/38, C08G 18/78, C08G 18/79, C08J 5/04, C08K 7/06

(54) **RESIN COMPOSITION FOR PREPARING A THERMOPLASTIC POLYMER MATRIX**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a resin composition for preparing a thermoplastic polymer matrix, and a thermoplastic polymer matrix obtained therefrom, a thermoplastic composite comprising the thermoplastic polymer matrix, a preparation method and use thereof, and a mechanical or structured part or article comprising the thermoplastic composite, and use thereof. The resin composition comprises a polyisocyanate with an isocyanate group functionality of 2.10 to 2.84, an isocyanate-reactive component with an isocyanate-reactive group functionality of less than 2.2, and an additive; wherein the molar ratio of isocyanate groups to isocyanate-reactive groups of the resin composition is of 0.5:1 to 2:1. The resin composition of the present invention has good high temperature fluidity and adjustable softness/hardness.

## Description

### Technical field

The present invention relates to a resin composition for preparing a thermoplastic polymer matrix, and a thermoplastic polymer matrix obtained therefrom, a thermoplastic composite comprising the thermoplastic polymer matrix, a preparation method and use thereof, and a mechanical or structured part or article comprising the thermoplastic composite, and use thereof.

### Prior art

A composite refers to a material composed of two or more different materials in various ways, which may take the advantages of various materials, overcome the defects of a single material, and expand the application range of the materials. In view of its light weight, high strength, convenient processing and molding, excellent elasticity, chemical corrosion resistance and weather resistance, composites have gradually replaced wood and metal alloys, and been widely used in fields, such as aerospace and aviation, automobile, electrical and electronic, construction, sports equipment.

In commercial scale applications, the most important type is the composites with organic matrix, in which the matrix material is generally polymer. According to the matrix resin, polymer-based composites may be divided into thermosetting polymer-based composites and thermoplastic polymer-based matrix composites. The thermosetting polymer is composed of three-dimensional structures with high crosslinking, which is generally obtained by curing reaction of liquid resin. The polymer chains after the reaction is generally permanently cross-linked and hardened. Resin materials commonly used in the thermosetting polymer include unsaturated polyesters, vinyl esters, epoxy resins or phenolic resins. Although thermosetting polymer-based composites have been widely used, there are still many problems to be solved, such as long curing time, high VOC emission, and low impact and damage resistance. Now, wastes and the increasingly serious pollution to the environment caused thereby have attracted great attention all over the world. In all countries, composite manufacturers have been required to recycle thermosetting composite wastes, and the emission of harmful gases in the molding process of thermosetting composites has been limited.

Thermoplastic composites have attracted extensive attention in the field of composites due to their unique advantages such as short molding time and recyclable wastes. At present, the method for manufacturing thermoplastic composites is mainly hot melt method or solvent method. In the hot melt method, the thermoplastic resin is mainly melted into a viscous liquid by heating and then the fibers are impregnated therewith. However, the thermoplastic resin melt has high melt viscosity and melting temperature, which makes it difficult to impregnate the fibers of the thermoplastic composite. In order to reduce the viscosity, it is usually necessary to increase the processing temperature. The temperature for continuous working with the thermoplastic resin is generally higher than 200°C, which means high energy cost and affects the economy of the composite process directly. In addition, the thermoplastic resin tends to degrade if the temperature is high, especially in the case for the semi-crystalline thermoplastic resin with a high melting point. It results in the risk of reducing the molecular weight and mechanical properties of the thermoplastic composite. In the solvent method, the resin is dissolved with a suitable solvent into a solution, the fibers are impregnated therewith, and then the solvent is evaporated by heating. An environmental problem is caused by using a large number of solvent.

CN111438966 discloses a composite prepared by in-situ polymerization of a thermoplastic (meth)acrylic resin, a polymer composite obtained by in-situ polymerization of a thermoplastic (meth)acrylic resin and a fiber material containing long fibers, and use thereof, a method for preparing such a composite, and a mechanical or structured part or article comprising the polymer composite. A (meth)acrylic polymer, a (meth)acrylic monomer and at least one initiator or initiator system for initiating the polymerization of the (meth)acrylic monomer are used for polymerization. The initiator or initiation system is activated by heating. A large number of methyl methacrylate monomer is used as the solvent in this system. Meanwhile, the system is cured with a high temperature or a free radical polymerization initiated by absorbing radiation.

WO2014/174098 discloses a low-temperature polymerization initiation system based on the above liquid (meth)acrylic resin, which comprises at least one accelerator, an organic aldehyde, a peracid and a liquid peroxy compound. The system has complicated ingredients. It takes at least 40 minutes to reach the reaction peak at 25°C.

CN10836829 discloses a method for preparing an in-situ polymerized thermoplastic prepreg by using an in-situ polymerized thermoplastic epoxy resin as a matrix resin. The system comprises an in-situ polymerized thermoplastic epoxy resin composition. The composition is maintained at 20 to 40°C for 50 to 240 hours in a first stage of the polymerization, in which it is cured to a prepolymer with a weight average molecular weight below 6000. The prepolymer is coated on a release paper to make a resin film. A continuous fiber reinforced prepreg is prepared by impregnating the reinforcing fibers. The prepreg sheets are stacked in layers, and then cured by heating and under pressure, until the weight average molecular weight of the thermoplastic epoxy resin is above 30000. The system has a long reaction time in the first stage. Since the prepared prepreg is still reactive, it needs to be stored at - 10°C before use, and there is also a requirement on the shelf life thereof (24 hours to 720 hours).

CN109467884 discloses a thermoplastic polymer-based composite and a preparation method thereof. The thermoplastic polymer-based composite is prepared by impregnating the reinforcing material with a mixture or an oligomer of epoxy resin, bismaleimide resin, bifunctional amine, and in-situ polymerizing thereof. The epoxy resin and bismaleimide resin are mixed while heating to 60 to 150°C. The bifunctional amine is added in proportion after cooling to room temperature. The fibers are impregnated therewith,. Then, the in-situ polymerization is initiated by heating, so that a thermoplastic composite is formed.

Since the existing thermoplastic resins cannot be cured in one-step reaction due to the low polymerization rate at room temperature and there is a problem cause by the volatile monomers containe in the resin system, a thermoplastic resin is needed that can fully impregnate the reinforcing material and has low energy consumption and high yield.

### Summary of invention

The present invention relates to a resin composition for preparing a thermoplastic polymer matrix, and a thermoplastic polymer matrix obtained therefrom, a thermoplastic composite comprising the thermoplastic polymer matrix, a preparation method and use thereof, and a mechanical or structured part or article comprising the thermoplastic composite, and use thereof.

A resin composition for preparing a thermoplastic polymer matrix according to the present invention comprises:
a) a polyisocyanate with an isocyanate group functionality of 2.10 to 2.84;
b) an isocyanate-reactive component with an isocyanate-reactive group functionality of less than 2.2, which comprises an aspartate having a structure of formula I and 0 to 50 weight% of a further isocyanate-reactive compound; wherein the isocyanate-reactive component is in a liquid form at 5°C to 25°C, and the aspartate having a structure of formula I is: 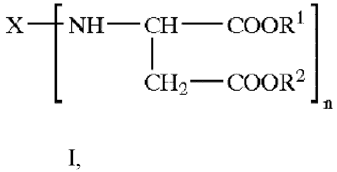
   wherein X is an aliphatic residue, R¹ and R² are each independently an organic group that is not reactive to isocyanate groups under normal pressure and at a temperature of less than or equal to 100°C, and n is an integer not less than 2;
   the isocyanate-reactive group of the further isocyanate-reactive compound is one or more of primary amino groups, secondary amino groups and hydroxyl group containing active hydrogen; and
c) an additive;
wherein the molar ratio of isocyanate groups to isocyanate-reactive groups of the resin composition is of 0.5:1 to 2:1.

According to one aspect of the present invention, it is provided a thermoplastic composite comprising a thermoplastic polymer matrix and a reinforcing material, the thermoplastic polymer matrix being prepared with the resin composition according to the present invention.

According to another aspect of the present invention, it is provided a thermoplastic polymer matrix prepared with the resin composition according to the present invention.

According to another aspect of the present invention, it is provided a method for preparing a thermoplastic composite, including impregnating the reinforcing material with the resin composition according to the present invention, and polymerizing to obtain the thermoplastic composite.

According to another aspect of the present invention, it is provided use of the thermoplastic composite according to the present invention for preparing mechanical or structured parts or articles.

According to another aspect of the present invention, it is provided a mechanical or structured part or article comprising the thermoplastic composite according to the present invention.

According to another aspect of the present invention, it is provided the use of the thermoplastic composite according to the present invention in automobile applications, marine applications, railway applications, sports, aerospace and aviation applications, photovoltaic applications, computer related applications, telecommunications applications or wind energy applications.

The thermoplastic polymer matrix of the present invention has good high temperature fluidity, adjustable softness/hardness, and may be processed by thermoforming or recycled repeatedly. The resin composition of the present invention can fully infiltrate the substrate, and has low energy consumption and high yield.

### Embodiments

The present invention provides a resin composition for preparing a thermoplastic polymer matrix comprising:
a) a polyisocyanate with an isocyanate group functionality of 2.10 to 2.84; b) an isocyanate-reactive component with an isocyanate-reactive group functionality of less than 2.2, which comprises an aspartate having a structure of formula I and 0 to 50 weight% of a further isocyanate-reactive compound; wherein the isocyanate-reactive component is in a liquid form at 5°C to 25°C, and the aspartate having a structure of formula I is: 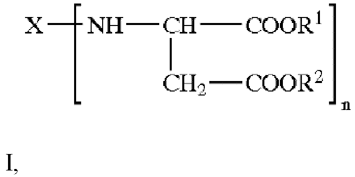
   wherein X is an aliphatic residue, R¹ and R² are each independently an organic group that is not reactive to isocyanate groups under normal pressure and at a temperature of less than or equal to 100°C, and n is an integer not less than 2;
   the isocyanate-reactive group of the further isocyanate-reactive compound is one or more of primary amino groups, secondary amino groups and hydroxyl group containing active hydrogen;
and c) an additive; wherein the molar ratio of isocyanate groups to isocyanate-reactive groups of the resin composition is of 0.5:1 to 2:1.

The present invention also provides a thermoplastic polymer matrix prepared with the resin composition, a thermoplastic composite comprising the thermoplastic polymer matrix, a preparation method and use thereof, and a mechanical or structured part or article comprising the thermoplastic composite, and use thereof.

The thermoplastic polymer matrix herein may be melted into a plastic state by heating, and become a solid after cooling. The process mentioned may be repeated.

The term "an isocyanate-reactive component" used herein refers to a component containing a group reactive to isocyanate groups, that is, a component containing a group having zerewitinoff-active hydrogen. The definition of the zerewitinoff-active hydrogen refers to Rompp's Chemical Dictionary (Rommp Chemie Lexikon), 10th edition, Georg Thieme Verlag Stuttgart, 1996. In general, the group having zerewitinoff-active hydrogen is understood in the art to mean hydroxyl group (OH), amino group (NHx) and thiol group (SH).

The molar ratio of isocyanate groups to isocyanate-reactive groups of the resin composition is preferably of 0.8:1 to 2:1, more preferably of 0.8:1 to 1.5:1, and most preferably of 1:1 to 1.2:1.

The viscosity of the resin composition is preferably 10 mPa·s to 10000 mPa·s, which is measured at 23°C with a Brookfield DV-II+Pro viscometer according to DIN EN ISO 3219.

The heating flow temperature of the thermoplastic polymer matrix is measured using glass slides (heating stage method). Two glass slides are prepared. An appropriate amount of cured thermoplastic polymer matrix (no more than 0.1g) is placed on one glass slide, and the other glass slide is placed thereon and pressed gently. Then, it is placed in the center of the heating stage, wherein the temperature of the heating stage is set in advance and kept at 220°C. The melting process of the thermoplastic polymer matrix is observed with a microscope. The heating flow temperature of the thermoplastic polymer matrix is not greater than 220°C, if it is completely melted into liquid at 220°C. The heating flow temperature of the thermoplastic polymer matrix is greater than 220°C, if it remains unmelted for 1 hour at 220°C.

### Component a) polyisocyanate

When component a) the polyisocyanate is a mixture of isocyanate compounds, the isocyanate group functionality of the polyisocyanate refers to the average functionality of isocyanate groups of the isocyanate compounds.

The polyisocyanate refers to any organic compound with two or more reactive isocyanate groups in a single molecule, such as diisocyanate, triisocyanate, tetraisocyanate, etc., and mixtures thereof. Cyclic and/or linear polyisocyanates may be advantageously used.

The content of isocyanate monomers in the polyisocyanate is preferably less than 1% by weight, relative to the total weight of the polyisocyanate.

The polyisocyanate is preferably one or more of aliphatic polyisocyanates, cycloaliphatic polyisocyanates, aromatic polyisocyanates, and polymeric homologues of the above isocyanates, and isocyanurates.

The aliphatic polyisocyanate is preferably one or more of hexane diisocyanate (hexamethylene-1,6-diisocyanate, HDI), pentane-1,5-diisocyanate, butane-1,4-diisocyanate, 4,4'-methylenebis(cyclohexyl isocyanate), 3,5,5-trimethyl-1-isocyanato-3-isocyanatomethylcyclohexane (isophorone diisocyanate, IPDI), 4-isocyanatomethyl-1,8-octane diisocyanate, 1,3-bis(isocyanatomethyl) benzene (XDI), hydrogenated xylylene diisocyanate and hydrogenated toluene diisocyanate.

The aromatic polyisocyanate is preferably one or more of toluene 2,4-diisocyanate, toluene 2,6-diisocyanate, diphenylmethane 4,4'-diisocyanate, diphenylmethane 2,4'-diisocyanate, p-phenylene diisocyanate, biphenyl diisocyanate, 3,3'-dimethyl-4,4'-diphenylene diisocyanate, hexahydrophenylene 1,3-diisocyanate, and derivatives thereof having iminooxadiazinedione, isocyanurate, uretdione, carbamate, allophanate, biuret, urea, oxadiazinetrione, oxazolidinone, acylurea and/or carbodiimide groups.

The isocyanate group functionality of component a) the polyisocyanate is preferably of 2.10 to 2.80, most preferably 2.30 to 2.80, which is calculated from the isocyanate group content and the molecular weight of the polyisocyanate. The molecular weight is determined by gel permeation chromatography (GPC).

The isocyanate group content of the polyisocyanate is preferably 5% by weight to 40% by weight, relative to the total weight of the polyisocyanate.

The viscosity of component a) the polyisocyanate is preferably of 100 mPa s to 30000 mPa s, most preferably 100 mPa·s to 3000 mPa·s, which is measured at 23°C according to DIN EN ISO 3219.

### Component b) isocyanate-reactive component

When component b) the isocyanate-reactive component is a mixture of isocyanate-reactive compounds, the isocyanate-reactive group functionality of the isocyanate-reactive component refers to the average functionality of isocyanate-reactive groups of the isocyanate-reactive compounds.

The isocyanate-reactive group functionality is calculated from the isocyanate group content and molecular weight of the isocyanate-reactive component. The molecular weight is determined by gel permeation chromatography (GPC).

The isocyanate-reactive group functionality of the isocyanate-reactive component is preferably 1.8 to 2.1, more preferably 1.9 to 2.05 and most preferably of 2 to 2.05.

### Aspartate having a structure of formula I

The amount of the polyaspartate is preferably of 50% by weight to 100% by weight, relative to the amount of component b) the isocyanate-reactive component as being 100% by weight.

The aliphatic residue is preferably one or more of linear alkyl residues, branched alkyl residues and cycloalkyl residues, and most preferably cycloalkyl residues.

The aliphatic residue herein is preferably derived from an alcohol compound, which is preferably one or more of ethylene glycol, 1,2-dihydroxypropane, 1,4-dihydroxybutane, 1,6-dihydroxyhexane, 2,2,4-and/or 2,4,4-trimethyl-1,6-dihydroxyhexane, 1-hydroxy-3,3,5 -trimethyl-5 -hydroxymethylcyclohexane, 4,4'-dihydroxydicyclohexylmethane, 3,3'-dimethyl-4',4'-dihydroxydicyclohexylmethane, 1,5-dihydroxy-2-methylpentane, 1,1,1-trimethylolpropane and 2,2-bis(hydroxymethyl)-1,3-propanediol (pentaerythritol).

R¹ and R² are each independently preferably an alkyl residue having 1 to 10 carbon atoms, and most preferably one or more of methyl, ethyl and butyl.

n is preferably an integer of 2 to 4, and most preferably 2.

When n of the aspartate is 2, it is preferably obtained by the reaction of a polyamine having the following formula and a maleate and/or fumarate having the following formula:

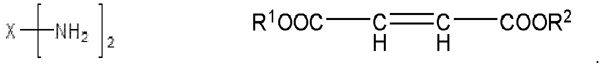

The polyamine is preferably one or more of ethylenediamine, 1,2-diaminopropane, 1,4-diaminobutane, 1,3-diaminopentane, 1,6-diaminohexane, 2,5-diamino-2,5-dimethylhexane, 2,2,4-trimethyl-1,6-diaminohexane, 2,4,4-trimethyl-1,6-diaminohexane, 1,11-diaminoundecane, 1,12-diaminododecane, 1,3-cyclohexanediamine, and 1,4-cyclohexanediamine, amino-3,3,5-trimethyl-5-aminomethyl-cyclohexane, 2,4-hexahydrotoluenediamine, 2,6-hexahydrotoluenediamine, 2,4'-diaminodicyclohexylmethane, 4,4'-diaminodicyclohexylmethane, 3,3'-dialkyl-4,4'-diamino-dicyclohexylmethane, 2,4,4'-triamino-5-methyldicyclohexylmethane, 2-methyl-1,5-pentanediamine, 1,3-xylylenediamine and 1,4-xylylenediamine, more preferably one or more of 1,4-diaminobutane, 1,6-diaminohexane, 2,2,4-trimethyl-1,6-diaminohexane, 2,4,4-trimethyl-1,6-diaminohexane, amino-3,3,5-trimethyl-5-aminomethylcyclohexane, 4,4'-diamino-dicyclohexylmethane, 3,3'-dialkyl-4,4'-diaminodicyclohexylmethane and 2-methyl-1,5-pentanediamine, and most preferably one or more of 2-methyl-1,5-pentanediamine, amino-3,3,5-trimethyl-5-aminomethylcyclohexane, 2,4'-diamino-dicyclohexylmethane, 4,4'-diamino-dicyclohexylmethane and 3,3'-dialkyl-4,4'-diaminodicyclohexylmethane.

The maleate and/or fumarate is preferably one or more of dimethyl maleate, diethyl maleate, dibutyl maleate, dimethyl fumarate, diethyl fumarate and dibutyl fumarate.

The reaction temperature is preferably of 0°C to 100°C.

The weight ratio of the maleate and/or fumarate to the polyamine is preferably 2: 1.

The weight ratio of the olefinic double bond of the maleate and/or fumarate to the primary amino group of the polyamine is preferably 1: 1.

The product obtained from the reaction is preferably purified by rectification.

The components of the reaction may or may not comprise a solvent, and preferably comprises a solvent.

The solvent is preferably one or more of methanol, ethanol, propanol and dioxane.

The equivalent of the amino groups of the aspartate is preferably of 200 to 500.

The viscosity of the aspartate is preferably of 100 to 4000 mPa·s.

The aspartate having a structure of formula I is most preferably one or more of isocyanate-reactive components described in US512617, US523674, US5489704, US5243012, US5736604, US6458293, US6833424, US7169876 or US2006/0247371, Desmophen NH1420, Desmophen NH1520, Desmophen NH1220, Desmophen NH1723LF, Desmophen NH2885, Desmophen NH1722, Desmophen NH2886, Desmophen NH1720, Desmophen NH1422 and Desmophen NH1423LF, which are commercially available from Covestro.

### Further isocyanate-reactive compound

The further isocyanate-reactive compound is preferably in an amount of not more than 50 % by weight, most preferably not more than 20% by weight, relative to the amount of component b) the isocyanate-reactive component as being 100% by weight.

In a preferred embodiment of the present invention the further isocyanate-reactive compound is preferably in an amount of 1 to 50 % by weight, most preferably 1 to 20% by weight, relative to the amount of component b) the isocyanate-reactive component as being 100% by weight

The viscosity of the further isocyanate-reactive compound is preferably of 10 mPa s to 100000 mPa s, most preferably 10 mPa·s to 5000 mPa·s, which is measured at 23°C according to DIN EN ISO 3219.

The further isocyanate-reactive compound is preferably one or more of polyhydroxy compounds, organic polyols and organic polyamines, most preferably one or more of organic polyols and organic polyamines.

The polyhydroxy compound is preferably one or more of ethylene glycol, 1,2-propanediol, 1,3-propanediol, diethylene glycol, trimethylolpropane, glycerin, bisphenol A and bisphenol S.

The organic polyol is preferably one or more of polyether polyols, polyester polyols, polyether carbonate polyols, polycarbonate diols, polymeric polyols, bio-based polyols and vegetable oil-based polyols.

The organic polyamine is preferably a compound with at least two amino groups, wherein the amino groups comprise at least one active hydrogen (N-H) group selected from primary or secondary amines. The organic amine is most preferably one or more of ethylenediamine, isophorone diamine, tetramethylene diamine, hexamethylene diamine, dodecamethylene diamine, m-xylylene diamine, diethylene triamine, triethylene tetramine, tetraethylene pentamine, pentaethylene hexamine, polyether-modified polyamine resins, epoxy-modified polyamine resins, carbonyl compound-modified polyamine resins, phenolic modified polyamine resins and polyether aspartate polyamine resins.

### Component c) additive

The additive is preferably one or more of light stabilizers, antioxidants, release agents, flame retardants, fillers, pigments, defoamers, leveling agents, wetting agents, coupling agents, dehydrating agents, thixotropic agents, chelating agents, free radical reaction inhibitors and other additives familiar to those skilled in the art, which may be added to the resin composition used in the composite.

The additive may optionally be contained in component a) the polyisocyanate and/or component b) the isocyanate-reactive component. The additive may also be stored separately, and mixed with component a) the polyisocyanate and/or component b) the isocyanate-reactive component before preparing the thermoplastic polymer matrix of the thermoplastic composite.

The filler is preferably one or more of aluminum hydroxide, bentonite, fly ash, wollastonite, perlite powder, floating beads, calcium carbonate, talc powder, mica powder, porcelain clay, fumed silica, expandable microsphere, diatomite, volcanic ash, barium sulfate, calcium sulfate, glass microspheres, stone powder, wood powder, wood chips, bamboo powder, bamboo chips, rice grains, straw chips, sorghum stem chips, graphite powder, metal powder, recycled powder of thermosetting composites, plastic particles and plastic powder. The glass microspheres may be solid or hollow.

The release agent may be any conventional release agent for polymer production, preferably one or more of long-chain carboxylic acids, amines of long-chain carboxylic acids, metal salts of long-chain carboxylic acids, and polysiloxanes. The long-chain carboxylic acids may be preferably fatty acids, most preferably stearic acid. The amines of long chain carboxylic acids may be preferably one or more of stearamide and fatty acid esters. The metal salts of long chain carboxylic acids may be preferably zinc stearate.

The flame retardant is preferably one or more of triaryl phosphates, trialkyl phosphates, triaryl phosphate having halogen, trialkyl phosphates having halogen, melamine, melamine resins, halogenated paraffins and red phosphorus.

The dehydrating agent is preferably a molecular sieve.

The defoamer is preferably a polydimethylsiloxane.

The coupling agent is used to improve the adhesion between the thermoplastic polymer matrix formed from the resin composition and the reinforcing material, and preferably one or more of monoethylene oxide and organic amine-functionalized trialkoxysilanes.

The thixotropic agent is preferably fine particle filler, most preferably one or more of clay and fumed silica.

The chelating agent is preferably one or more of acetylacetone, benzoylacetone, trichloroacetylacetone, and ethyl acetoacetate.

The free radical reaction inhibitor is preferably one or more of polymerization inhibitor and polymerization retarder, more preferably one or more of phenolic compounds, quinone compounds and hindered amine compounds, most preferably one or more of methylhydroquinone, p-methoxyphenol, benzoquinone, polymethylpiperidine derivatives and low-valent copper ions.

The amount of the additive is not limited, as long as it does not affect the performance of the resin composition of the present invention.

### Thermoplastic composite

The thermoplastic polymer matrix is preferably in an amount of 20% by weight to 80% by weight, relative to the total weight of the thermoplastic composite.

The reinforcing material is preferably a reinforcing fiber material, most preferably one or more of plant fibers, wood fibers, animal fibers, mineral fibers, synthetic polymer fibers, glass fibers and carbon fibers.

The reinforcing material is preferably present in a form selected from one or more of fiber mats, nonwoven fabrics of woven fibers, woven rovings of woven fibers, and woven fiber bundles.

The thermoplastic polymer matrix is preferably obtained by polymerization of the resin composition. The thermoplastic polymer matrix is most preferably prepared under a condition that the resin composition undergoes the free radical polymerization reaction and the polyaddition reaction of isocyanate groups and hydroxyl groups simultaneously.

In the polyaddition reaction of isocyanate groups and hydroxyl groups, the isocyanate groups may be those contained in component a) the polyisocyanate, or those contained in an intermediate product of the reaction of component a) the polyisocyanate and component b) the isocyanate-reactive component. The hydroxyl groups may be those contained in component b) the isocyanate-reactive component, or those contained in an intermediate product of the reaction of component a) the polyisocyanate and component b) the isocyanate-reactive component.

The free radical polymerization reaction is a polyaddition reaction of olefinic bonds, wherein the olefinic bonds may be those contained in component b) the isocyanate-reactive component, or those contained in an intermediate product of the reaction of component b) the isocyanate-reactive component and component a) the polyisocyanate.

The polyaddition reaction, i.e., the polyaddition reaction of isocyanate groups and hydroxyl groups, and the free radical polymerization reaction exist simultaneously.

The thermoplastic composite is preferably prepared by one or more of pultrusion molding, winding molding, hand lay-up molding, spray molding, vacuum infusion, prepreg mold pressing and resin transfer molding, most preferably vacuum infusion.

### Method for preparing a thermoplastic composite

It is well known to those skilled in the art that the polyaddition reaction of isocyanate groups and hydroxyl groups can be promoted by a tin or amine catalyst. The free radical polymerization can be accelerated by heating or using an accelerant, such as aniline compounds. The polyaddition reaction and the free radical polymerization can be promoted simultaneously by using an accelerant, such as cobalt salts. Therefore, those skilled in the art may select an appropriate condition, so that the resin composition undergoes the free radical polymerization reaction and the polyaddition reaction of isocyanate groups and hydroxyl groups simultaneously.

The content of the reinforcing material is preferably 1 weight% to 90 weight%, further preferably 30 weight% to 85 weight%, most preferably 50 weight% to 80 weight%, relative to the total weight of the thermoplastic composite.

Those skilled in the art are familiar with the operation process of vacuum infusion, for example, as described in CN1954995A, the contents of the disclosure being entirely incorporated herein by reference.

In the vacuum infusion, one or more core materials optionally completely or partially covered with a reinforcing material are arranged in a mold. Then, the resin composition is infused into the mold by forming a negative pressure in the mold. Before curing, the reinforcing material is completely impregnated with the resin composition, and the core material is also completely or partially impregnated with the resin composition. Then, under an appropriate condition, the resin composition undergoes the polyaddition reaction and the free radical polymerization simultaneously, so that the resin composition is cured to form a thermoplastic polymer matrix. In the above vacuum infusion, the mold may be that commonly used in the art. Those skilled in the art may select an appropriate mold according to the performance and the size required by the final product. When preparing large articles by vacuum infusion, it is necessary to keep the viscosity of the resin composition low enough to maintain good fluidity during the infusion process, in order to ensure a sufficient operation time.

The use of the core material together with the thermoplastic polymer matrix and the reinforcing material facilitates the molding of the thermoplastic composite and reduces the weight thereof. The thermoplastic composite of the present invention may contain a core material commonly used in the art, including but not limited to polystyrene foams, such as COMPAXX ^{®} foam; polyester PET foams; polyimide PMI foams; polyvinyl chloride foams; metal foams, such as metal foam available from Mitsubishi; Balsa wood, etc.

The thermoplastic composite of the present invention may also be prepared by pultrusion molding, winding molding, hand lay-up molding, spray molding, or a combination thereof. The detailed description of these processes can be found in "Composite Technology and Equipment", Chapter 2 and Chapters 6-9 (Liu Xiongya et al., 1994, published by Wuhan University of Technology). The entire content of the above disclosure is incorporated herein by reference.

### Use

The mechanical or structured part or article is selected from structured members or lightweight structured members of profiles, carriers, and reinforced pillars, and most preferably selected from automobile parts, ship parts, train parts, sports products, aircraft or helicopter parts, spacecraft or rocket parts, photovoltaic module parts, wind turbine parts, furniture parts, building or construction parts, telephone or cellphone parts, computer or television parts, printer and photocopier parts.

### Examples

Unless defined otherwise, all technical and scientific terms used herein have the same meaning as commonly understood by those skilled in the art. When the definition of a term in this specification conflicts with the meanings commonly understood by those skilled in the art, the definition described herein shall prevail.

Unless indicated otherwise, all numbers expressing quantities of ingredients, reaction conditions and the like used in the specification and claims are to be understood as being modified by the term "about". Accordingly, unless indicated to the contrary, the numerical parameters set forth herein are approximations that can vary depending upon the desired properties to be obtained.

Unless otherwise indicated, the wordings "a", "an", and "the" used herein are intended to include "at least one" or "one or more". For example, the wording "a component" refers to one or more components, so that more than one component may be considered and may be adopted or used in the implementation of the described embodiments.

The wording "and/or" used herein refers to one or all of the cited elements.

The wording "include" and "comprise" used herein cover the presence of the mentioned elements alone and the presence of other elements not mentioned in addition to the mentioned elements.

All percentages in the present invention are weight percentage, unless otherwise stated.

The analysis and measurement in the present invention are performed at 23±2°C and 50±5% humidity, unless otherwise stated.

The isocyanate group (NCO) content is determined in accordance with DIN-EN ISO 11909:2007-05, and the measured data includes content of free and potentially free NCO.

The viscosity of the polyisocyanate is measured at 23°C with a Brookfield DV-II+Pro viscometer according to DIN EN ISO 3219.

High temperature fluidity: the melting state of the thermoplastic polymer matrix at high temperature is tested with glass slides (heating stage method). Two glass slides are prepared. An appropriate amount of cured thermoplastic polymer matrix (no more than 0.1g) is placed on one glass slide, and the other glass slide is placed thereon and pressed gently. Then, it is placed in the center of the heating stage, wherein the temperature of the heating stage is set in advance and kept at 220°C. The melting process of the thermoplastic polymer matrix is observed with a microscope. It is recorded as O (qualified), if it is completely melted into liquid at 220°C. It is recorded as X (unqualified), if it remains unmelted for 1 hour at 220°C.

Shore hardness: the cured thermoplastic polymer matrix is tested at room temperature in accordance with DIN EN ISO 868.

Viscosity of resin composition: it is tested with a Brookfield DV-II+Pro viscometer at 23°C according to DIN EN ISO 3219 for the compositions mixed by a Speedmixer.

Glass transition temperature (Tg) of thermoplastic composite: it is measured by dynamic mechanical analysis method DMA in accordance with GB/T 40396.

Bending strength and bending modulus of thermoplastic composite: it is tested by a universal material testing machine in accordance with ISO 14125.

### Raw materials and agents

Desmodur N3400: aliphatic uretdione polyisocyanate based on hexamethylene diisocyanate with a solid content of 100% by weight, isocyanate group (NCO) content of 21.8 % by weight, viscosity of about 150 mPa·s (23°C), and isocyanate group functionality of 2.5, available from Covestro;
Desmodur NZ 300: aliphatic uretdione/trimer based on hexamethylene diisocyanate/isophorone diisocyanate with a solid content of 100% by weight, NCO content of 21.0 % by weight, viscosity of about 3000 mPa·s (23°C), and isocyanate group functionality of 2.8, available from Covestro;
Desmodur N 31100: aliphatic allophanate based on hexamethylene diisocyanate with a solid content of 100% by weight, NCO content of 20.0 % by weight, viscosity of about 500 mPa s (23°C), and isocyanate group functionality of 2.3, available from Covestro;
Desmodur N 3300: aliphatic trimer based on hexamethylene diisocyanate with a solid content of 100% by weight, NCO content of 21.8 % by weight, viscosity of about 3000 mPa·s (23°C), and isocyanate group functionality of 3.5, available from Covestro;
Desmodur N 3900: aliphatic trimer based on hexamethylene diisocyanate with a solid content of 100% by weight, NCO content of 23.5% by weight, viscosity of about 730 mPa·s (23°C), and isocyanate group functionality of 3.3, available from Covestro;
Desmodur NZ 200: aliphatic trimer based on hexamethylene diisocyanate/isophorone diisocyanate with a solid content of 100% by weight, NCO content of 21.0 % by weight, viscosity of about 22500 mPa·s (23°C), and isocyanate group functionality of 3.2, available from Covestro;
Desmodur N 3200: aliphatic biuret based on hexamethylene diisocyanate with a solid content of 100% by weight, NCO content of 23.0% by weight, viscosity of about 2500 mPa·s (23°C), and isocyanate group functionality of 3.5, available from Covestro;
Desmodur XP 2599: aliphatic prepolymer based on hexamethylene diisocyanate and containing ether group, with a solid content of 100% by weight, NCO content of 6% by weight, viscosity of about 3000 mPa·s (23°C), and isocyanate group functionality of 4, available from Covestro;
Desmodur N 3500: aliphatic allophanate/trimer based on hexamethylene diisocyanate with a solid content of 100% by weight, NCO content of 19.5% by weight, viscosity of about 35000 mPa·s (23°C), and isocyanate group functionality of 4.5, available from Covestro;
Desmocomp AP200: aliphatic isocyanate with a solid content of 100% by weight, NCO content of 23% by weight, viscosity of about 1300 mPa·s (23°C), and isocyanate group functionality of 3, available from Covestro;
Desmodur Eco N 7300: aliphatic trimer based on pentane diisocyanate with a solid content of 100% by weight, NCO content of 21.5% by weight, viscosity of about 9500 mPa·s (23°C), and isocyanate group functionality of 3.7, available from Covestro;
Desmophen NH 1420: with amino group functionality of 2.0, equivalent of amino groups of 279, and viscosity of 850 to 1800 mPa·s (23°C), available from Covestro;
Desmophen NH 1520: with amino group functionality of 2.0, equivalent of amino groups of 290, and viscosity of 800 to 2000 mPa·s (23°C), available from Covestro;
Desmophen NH 1720: with amino group functionality of 2.0, equivalent of amino groups of 295, and viscosity of ≥80 mPa·s (23°C), available from Covestro;
Desmophen NH 1220: with amino group functionality of 2.0, equivalent of amino groups of 234, and viscosity of <100 mPa·s (23°C), available from Covestro;
Butanediol BDO: with hydroxyl group functionality of 2.0, and purity >99.0%, available from Sinopharm Chemical Reagent Co., Ltd.;
Propanetriol: with hydroxyl group functionality of 2.0, and purity >99.0%, available from Sinopharm Chemical Reagent Co., Ltd.;
4,4'-methylenebis(2-ethyl-6-methylaniline) MCDEA: with amino group functionality of 2.0, being solid at room temperature, and with purity of 98%, available from Adamas Reagent;
BYK-P9920: a wetting and dispersing agent, available from BYK;
Carbon fiber cloth: carbon fiber twill weave cloth, model TC42S-12K, available from Tairyfil.

Table 1 shows the composition of resin compositions and the performance test results of thermoplastic polymer matrices of the Examples. Table 2 shows the composition of resin compositions and the performance test results of thermoplastic polymer matrices of the Comparative Examples.

### Method for preparing thermoplastic polymer matrices of the Examples and the Comparative Examples

At 23°C and 55% to 65% humidity, a mixture was prepared according to the composition of the resin composition shown in Table 1 or 2, and mixed for 1 minute at 2750 rpm in a Speedmixer DAC 150.1 FVZ from Hauschild Company. Subsequently, the mixture was poured into a suitable mold and left at room temperature for 24 hours to obtain the thermoplastic polymer matrix of the Examples and the Comparative Examples.

As can be seen from Table 1, the thermoplastic polymer matrices obtained by curing the resin compositions of Examples 1 to 21 had good high temperature fluidity, were thermoplastic, and had adjustable softness/hardness.

When the isocyanate functionality of the polyisocyanates of comparative resin compositions in Comparative Examples 1 to 5 was less than 2.10 or more than 2.84, the high temperature fluidity of the thermoplastic polymer matrices obtained by curing the resin compositions was unqualified. The thermoplastic polymer matrices had no fluidity when heated at 220°C. The polymer matrices were prone to thermal decomposition at a higher temperature and had poor strength.

As can be known by the comparison between Example 21 and Comparative Example 6, when the isocyanate-reactive group functionality of the isocyanate-reactive component in the comparative resin composition was 2.2, the high temperature fluidity of the thermoplastic polymer matrix obtained by curing the resin composition was unqualified. The thermoplastic polymer matrix had no fluidity when heated at 220°C. The polymer matrix was prone to thermal decomposition at a higher temperature and had poor strength.

MCDEA contained in the comparative resin composition of Comparative Example 7 was an aromatic amine being solid at room temperature. The high temperature fluidity of the thermoplastic polymer matrix obtained by curing the resin composition was unqualified. The thermoplastic polymer matrix had no fluidity when heated at 220°C. The polymer matrix was prone to thermal decomposition at a higher temperature and had poor strength. The composition was rapidly cured at room temperature, which resulted in a short operation time.

### Example 22 Preparation of thermoplastic composite

The resin composition was mixed according to the ratio of Example 2 in Table 1. 0.5% by weight of BKY - P9920 (relative to the total weight of the resin composition in Example 2) was added. It was uniformly mixed to obtain a mixture with a viscosity of 480 mPa·s.

A piece of 15cm × 15cm carbon fiber cloth was cut and laid on a silicone-coated release paper. The mixture was applied uniformly on the carbon fiber cloth using a brush and pressed by a compression roller, so that the carbon fiber cloth was fully impregnated with the resin. The impregnated carbon fiber cloth was left at room temperature for 24 hours, and then placed in an oven at 40°C for 20 minutes for the in-situ polymerization to produce a thermoplastic composite prepreg. The prepreg could be stored at room temperature for a long time.

Two piece of composite prepregs were stacked together, and heated outside the mold at 170°C for 4 minutes, then put into a hot press with a mold temperature of 80°C to 85°C and a pressure of 4000 KN. After 1 minute of hot pressing, the mold was opened and cooled to obtain the thermoplastic composite.

The thermoplastic composite had a glass transition temperature of 104°C; bending modulus of 22 Gpa and bending strength of 350 MPa. In the above method, the viscosity of the mixture liquid was low at room temperature, so that it was easy to impregnate the fiber thoroughly. No high temperature was required for melting the liquid, and it caused low energy consumption. The obtained thermoplastic composite could be processed at 170°C for molding with good processability.

Those skilled in the art will readily understand that the present invention is not limited to the foregoing details, and can be implemented in other specific forms without departing from the spirit or main characteristics of the present invention. Therefore, the examples should be regarded as illustrative rather than restrictive from any point of view, so that the scope of the present invention is illustrated by the claims rather than the foregoing description. Therefore, any change, as long as it falls into the meaning and scope of equivalents of the claims, shall be regarded as belonging to the present invention.

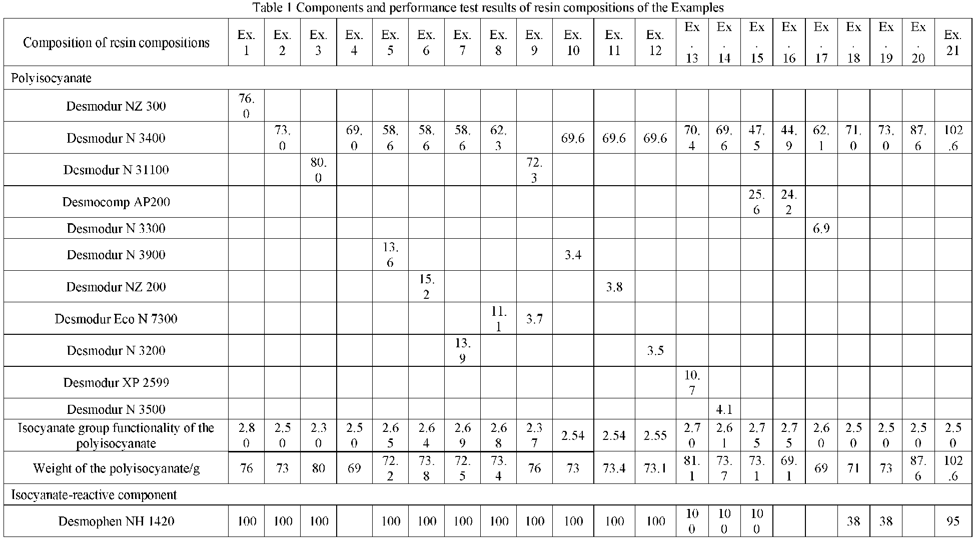

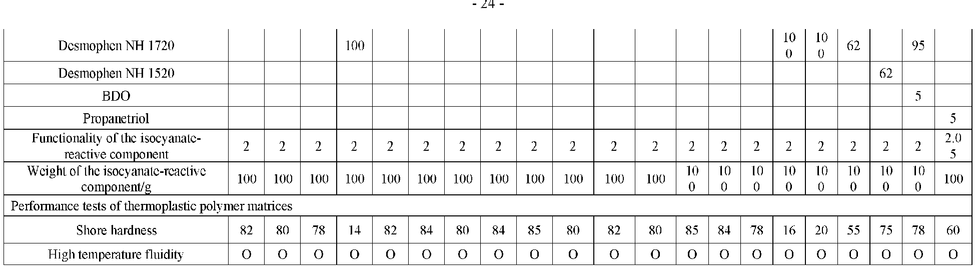

**Table 2 Components and performance test results of resin compositions of the Comparative Examples**

| Composition of resin compositions | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Polyisocyanate | | | | | | | |
| Desmodur N 3400 | 58.6 | 58.6 | | 34.5 | 45.4 | 102.6 | 69.2 |
| Desmocomp AP200 | | | | 34.5 | | | |
| Desmodur N 3300 | | | 73.0 | | 27.8 | | |
| Desmodur XP 2599 | 53.3 | | | | | | |
| Desmodur N 3500 | | 16.4 | | | | | |
| Isocyanate group functionality of the polyisocyanate | 3.21 | 2.94 | 3.50 | 2.85 | 2.87 | 2.50 | 2.50 |
| Weight of the polyisocyanate/g | 111.9 | 75 | 73 | 69 | 73.3 | 102.6 | 69.2 |

| Isocyanate-reactive component | | | | | | | |
|---|---|---|---|---|---|---|---|
| Desmophen NH 1420 | | | | | 100 | | 42 |
| Desmophen NH 1720 | 100 | 100 | 100 | 100 | | 80 | |
| Desmophen NH 1220 | | | | | | | 42 |
| Propanetriol | | | | | | 20 | |
| MCDEA | | | | | | | 16 |
| Functionality of the isocyanate-reactive component | 2 | 2 | 2 | 2 | 2 | 2.2 | 2 |
| Weight of the isocyanate-reactive component/g | 100 | 100 | 100 | 100 | 100 | 100 | 100 |

| Performance tests of thermoplastic polymer matrices | | | | | | | |
|---|---|---|---|---|---|---|---|
| Shore hardness | 80 | 70 | 80 | 40 | 79 | 30 | 70 |
| High temperature fluidity | X | X | X | X | X | X | X |

## Claims

1. A resin composition for preparing a thermoplastic polymer matrix, comprising:
a) a polyisocyanate with an isocyanate group functionality of 2.10 to 2.84;
b) an isocyanate-reactive component with an isocyanate-reactive group functionality of less than 2.2, which comprises an aspartate having a structure of formula I and 0 to 50 weight% of a further isocyanate-reactive compound; wherein the isocyanate-reactive component is in a liquid form at 5°C to 25°C, and the aspartate having a structure of formula I is: 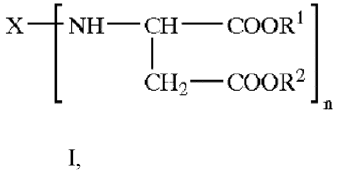
wherein X is an aliphatic residue, R¹ and R² are each independently an organic group that is not reactive to isocyanate groups under normal pressure and at a temperature of less than or equal to 100°C, and n is an integer not less than 2;
the isocyanate-reactive group of the further isocyanate-reactive compound is one or more of primary amino groups, secondary amino groups and hydroxyl group containing active hydrogen; and
c) an additive;
wherein the molar ratio of isocyanate groups to isocyanate-reactive groups of the resin composition is of 0.5:1 to 2:1.

2. The resin composition according to claim 1, wherein the molar ratio of isocyanate groups to isocyanate-reactive groups of the resin composition is of 0.8:1 to 2:1, more preferably of 0.8:1 to 1.5:1, and most preferably of 1:1 to 1.2: 1.

3. The resin composition according to claim 1 or 2, wherein the isocyanate monomer content of the polyisocyanate is less than 1% by weight, relative to the total weight of the polyisocyanate.

4. The resin composition according to any one of claims 1 to 3, wherein the isocyanate group functionality of the polyisocyanate is of 2.10 to 2.84, and most preferably 2.30 to 2.80.

5. The resin composition according to any one of claims 1 to 4, wherein the further isocyanate-reactive compound is in an amount of 0 to 20 weight%, relative to the total weight of component b) the isocyanate-reactive component.

6. The resin composition according to any one of claims 1 to 5, wherein the viscosity of the resin composition is 10 mPa·s to 10000 mPa s, which is measured at 23°C according to DIN EN ISO 3219.

7. A thermoplastic polymer matrix prepared with the resin composition according to any one of claims 1 to 6.

8. The resin composition according to claim 7, wherein the heating flow temperature of the thermoplastic polymer matrix is not more than 220°C, which is measured according to the heating stage method, and the Shore hardness D thereof is of 10 to 90, which is tested according to DIN EN ISO 868.

9. A thermoplastic composite comprising a thermoplastic polymer matrix and a reinforcing material, the thermoplastic polymer matrix being prepared with the resin composition according to any one of claims 1 to 6.

10. The thermoplastic composite according to claim 9, wherein the thermoplastic polymer matrix is in an amount of 20% by weight to 80% by weight, relative to the total weight of the thermoplastic composite.

11. The thermoplastic composite according to claim 9 or 10, wherein the reinforcing material is a reinforcing fiber material, which is most preferably one or more of plant fibers, wood fibers, animal fibers, mineral fibers, synthetic polymer fibers, glass fibers and carbon fibers.

12. The thermoplastic composite according to any one of claims 9 to 11, wherein the reinforcing material is present in a form selected from one or more of fiber mats, nonwoven fabrics of woven fibers, woven rovings of woven fibers, and woven fiber bundles.

13. The thermoplastic composite according to any one of claims 9 to 12, wherein the thermoplastic composite is prepared by one or more of pultrusion molding, winding molding, hand lay-up molding, spray molding, vacuum infusion, prepreg mold pressing and resin transfer molding.

14. A method for preparing a thermoplastic composite, including impregnating the reinforcing material with the resin composition according to any one of claims 1 to 6, and polymerizing to obtain the thermoplastic composite.

15. Use of the thermoplastic composite according to any one of claims 9 to 13 for preparing mechanical or structured parts or articles.

16. The use according to claim 15, wherein the mechanical or structured parts or articles are selected from structured members or lightweight structured members of profiles, carriers, and reinforced pillars, and most preferably selected from automobile parts, ship parts, train parts, sports products, aircraft or helicopter parts, spacecraft or rocket parts, photovoltaic module parts, wind turbine parts, furniture parts, building or construction parts, telephone or cellphone parts, computer or television parts, printer and photocopier parts.

17. A mechanical or structured part or article comprising the thermoplastic composite according to any one of claims 9 to 13.

18. Use of the thermoplastic composite according to any one of claims 9 to 13 in automobile applications, marine applications, railway applications, sports, aerospace and aviation applications, photovoltaic applications, computer related applications, telecommunications applications or wind energy applications.
